# EUROPEAN PATENT SPECIFICATION

(11) **EP 3 270 505 B1**
(45) Date of publication and mention of the grant of the patent: **14.09.2022**
(21) Application number: 15884528.9
(22) Date of filing: 09.03.2015
(51) Int. Cl.: F02N 11/08, F02N 11/04, H02P 9/04, H02P 25/22, H02M 1/36, H02M 7/797, H02P 9/48

(54) **STARTER GENERATOR DEVICE, AND STARTING AND GENERATING METHOD**
STARTERGENERATOR SOWIE START- UND GENERIERUNGSVERFAHREN
DISPOSITIF ET PROCÉDÉ DE GÉNÉRATION ÉLECTRIQUE DE DÉMARRAGE

(43) Date of publication of application: 17.01.2018
(73) Proprietor: Shindengen Electric Manufacturing Co., Ltd., Tokyo 100-0004 (JP)
(72) Inventor: ARAI Tatsuya, Hanno-shi Saitama 357-8585 (JP)
(74) Representative: Dr. Weitzel & Partner
(86) International application number: PCT/JP2015/056828
(87) International publication number: WO 2016/143032

(56) References cited:
- EP-A1- 2 139 106
- JP-A- 2003 174 790
- JP-A- 2004 080 931
- JP-A- 2005 184 967
- JP-A- 2010 226 926
- JP-A- 2010 226 926
- JP-A- 2012 241 562
- US-A1- 2001 006 292
- US-A1- 2002 047 418
- US-A1- 2004 036 295
- US-A1- 2005 134 238
- US-A1- 2007 241 699
- US-A1- 2009 302 792
- US-A1- 2010 001 672
- US-A1- 2011 316 466

## Description

### TECHNICAL FIELD

The present invention relates to a starter generator apparatus and a starting power generating method.

### BACKGROUND ART

Conventionally, ACG (AC generator) starter motors (starter generators) have been widely used in vehicles, particularly, small motorcycles. The ACG starter motor functions as a starter motor at start of an engine and functions as a power generator after the start of the engine (for example, Patent Document 1, Patent Document 2 and Patent Document 3).

Some ACG starter motors are designed such that the field is constituted of a permanent magnet, and winding specifications of an armature satisfy torque characteristics required at the start of the engine (Patent Document 1 and Patent Document 2). In such a configuration, if the ACG starter motor is used as a power generator, the amount of generated power exceeds the amount of power required for an electrical load, so that surplus power will be generated. Further, in such an ACG starter motor, a system for suppressing the generated power by short control of the semiconductor elements constituting a rectifier circuit is used. In this system, a current refluxing the ACG starter motor flows through power device elements that drive the armature winding or the ACG starter motor of the ACG starter motor so as to heat the power device elements. This causes power loss, thereby deteriorating the fuel efficiency of the vehicle and also worsening the engine friction. For this reason, in the configurations described in Patent Document 1 and Patent Document 2, a plurality of armature windings of the ACG starter motor are provided in parallel, armature windings to be used are switched between in a case where the ACG starter motor is used as the ACG starter motor and in a case where the ACG starter motor is used as a power generator.

### CITATION LIST

### [Patent Document]

[Patent Document 1] Japanese Patent Laid-Open Publication No. 2003-83209
[Patent Document 2] Japanese Patent No. 4851184
[Patent Document 3] Japanese Patent No. 4329527
[Patent Document 4] JP 2005 184967 A, Patent application of Patent Document 3
[Patent Document 5] JP 2003 174790 A
[Patent Document 6] US 2001/006292 A1
[Patent Document 7] US 2007/241699 A1

### DISCLOSURE OF THE INVENTION

### Problems to be Solved by the Invention

However, the configurations described by Patent Document 1 to Patent Document 3 have the following problems. First, in the configuration described in Patent Document 1, although the armature winding is formed of four windings connected in parallel, one phase among the three phases in all the windings are commonly connected. In other words, the winding used as an ACG starter motor and the winding used as a power generator are connected to a common node, and thus are not fully disconnected. Additionally, selection of the winding is performed in the relay. For this reason, a decrease in life of the contact is an issue in a case where the relay is frequently turned on and off, as in the case of idle stop control. Further, in the configuration in which one phase of each winding is connected in common, in a case where the relay is replaced with MOSFETs, the following points will be problems. In other words, in the case of the relay, the current can be cut off in both directions by turning off the contact point. On the other hand, in the case of MOSFETs, even if the MOSFETs are turned off, the current flows to the parasitic diode between the drain and the source, so that the current only in one direction can be cut off. Therefore, in a case where the MOSFETs instead of the relay are used to disconnect the windings, the winding used as the ACG starter motor is not disconnected, so that the generated power is excessively supplied from the winding of the ACG starter motor, thereby causing an increase in power loss.

Additionally, the configuration described in Patent Document 2 has problems that it is for controlling a neutral point, it can be used only in a case where armature windings are star-connected, and it is not applicable to a case where the armature windings are delta-connected. Since a neutral point is not present in the delta connection, in consideration of a combination of delta connection and armature windings, the separated relay is increased, thereby causing the higher costs and the complexity of wirings.

Further, in the configuration described in Patent Document 3, the ACG starter motor is constituted of two armature windings, and has a configuration that only one of the armature windings is used when the ACG starter motor is used as an ACG starter motor, while two windings are used when the ACG starter motor is used as a power generator. Additionally, unlike the configurations described in Patent Document 1 and Patent Document 2, in the configuration described in Patent Document 3, the field is constituted with a winding. In this configuration, normally, a current is supplied to the field winding with a brush. As compared with the case of constituting the field using a permanent magnet, the configuration described in Patent Document 3 has problems that it is difficult to miniaturize the apparatus, and it is not suitable to the direct mounting onto a crankshaft, as illustrated in Patent Document 2.

The present invention has an object to provide a starter generator apparatus and a starting power generating method which can solve the above-described problems.

### Means for Solving the Problems

A starter generator apparatus according to one aspect of the present invention includes: a starter generator including an armature unit including a first winding portion and a second winding portion which are arranged in parallel, each of the first winding portion and the second winding including a polyphase coil, and a field unit including a permanent magnet. The above identified starter generator apparatus comprises the further features of claim 1

A starting power generating method according to another aspect of the present invention is for a starter generator apparatus including: a starter generator including an armature unit including a first winding portion and a second winding portion which are arranged in parallel, each of the first winding portion and the second winding including a polyphase coil, and a field unit including a permanent magnet; a first orthogonal transformation unit connected to the first winding portion and configured to bidirectionally convert an electric power between a direct current and an alternate current; a second orthogonal transformation unit connected to the second winding portion and configured to bidirectionally convert an electric power between a direct current and an alternate current; one or plural switching elements interposed between a predetermined input/output terminal connected to the battery and at least one of a DC terminal of the first orthogonal transformation unit and a DC terminal of the second orthogonal transformation unit, and configured to perform connection and disconnection between the input/output terminal and the at least one of the DC terminals; and a control unit configured to control the plural orthogonal transformation units and the plural switching elements, the starting power generating method comprising:
a step of controlling the plurality of switching elements to turn on or off. The control unit selects, by the switching elements, either one or both of the first wiring portion and the second wiring portion in each of cases where the starter generator is used as a power generator and where the starter generator is used as a starter motor for starting an engine, based on a magnitude of a load of a piston of the engine and a coolant temperature of the engine in each of the cases.

### Effects of the Invention

According to the present invention, it is possible to easily improve the control characteristics of the starter generator, such as a reduction in power loss.

### BRIEF DESCRIPTION OF THE DRAWINGS

FIG. 1 is a block diagram showing a configuration example of an embodiment of the present invention.
FIG. 2 is a view schematically showing a configuration example of a starter generator 1 shown in FIG. 1.
FIG. 3 is a circuit diagram showing a power conversion unit 6 and winding portions 11 and 12 shown in FIG. 1.
FIG. 4 is a diagram showing an example of energization modes of the power conversion unit 6 shown in FIG. 3.
FIG. 5 is a diagram showing an example of energization modes of the power conversion unit 6a shown in FIG. 3.
FIG. 6 is a view schematically showing an operation example of a control unit 7 shown in FIG. 1.

### MODE FOR CARRYING OUT THE INVENTION

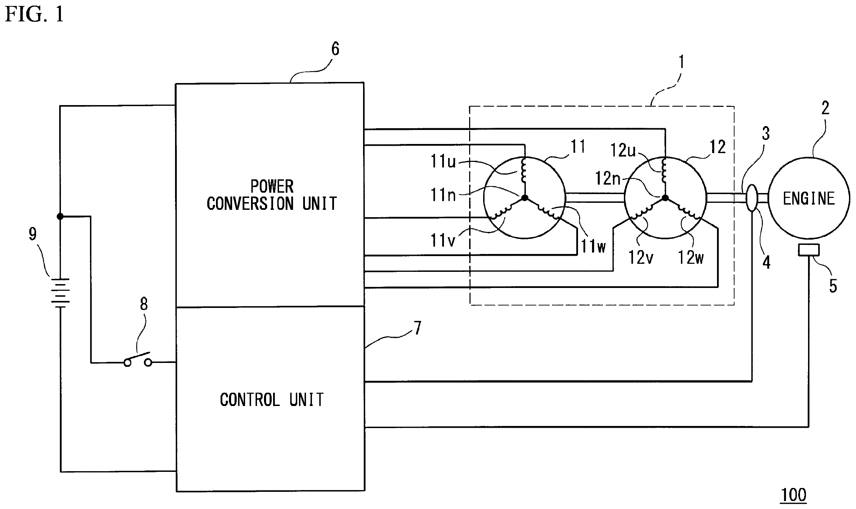

Hereinafter, embodiments of the present invention will be described with reference to the accompanying drawings. FIG. 1 is a block diagram showing a configuration example of a starting power generation control system (starter generator) 100 of an embodiment of the present invention. The starting power generation control system 100 shown in FIG. 1 includes a starter generator (ACG starter motor) 1, an engine 2, a crankshaft 3, a rotation angle sensor 4, an engine water temperature gauge 5, a power conversion unit 6, a control unit 7, a starter switch 8, and a battery 9.

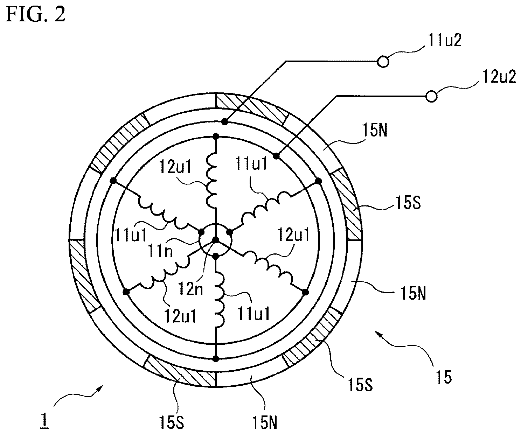

The starter generator 1 is directly connected to the crankshaft 3 and rotates in synchronism with the rotation of the engine 2. The starter generator 1 operates as a starter motor or ACG under control of the power conversion unit 6. The starter generator 1 includes a winding portion 11, a winding portion 12, and a field portion 15 shown in FIG. 2. The winding portion 11 includes coils 11u, 11v, and 11w which constitute a star-connected three-phase coil (polyphase coil). The winding portion 12 includes coils 12u, 12v and 12w which constitute a star-connected three-phase coil. A neutral point 1 In is a neutral point of the star connection that constitutes the winding portion 11. A neutral point 12n is a neutral point of the star connection that constitutes the winding portion 12. The coils 11u to 11w and the coils 12u to 12w are wound on the same armature core (not shown), and are a pair of armature windings electrically insulated from each other. Here, the winding portion 11, the winding portion 12, and the armature core (not shown) constitute an armature unit. Here, the connection of the winding portion 11 and the winding portion 12 is not limited to the star connection and may be a delta connection.

FIG. 2 is a view, viewed from an axial direction, schematically showing a configuration example of the winding portion 11, the winding unit 12, and the field portion 15 of the starter generator 1. Here, FIG. 2 shows only the coil 11u and the coil 12u. In the configuration example shown in FIG. 2, the starter generator 1 is an outer rotor type brushless motor where the field portion 15 is constituted of the plural pairs of N-pole permanent magnets 15N and S-pole permanent magnets 15S. The coil 11u is constituted of three windings arranged at 120-degree intervals with respect to the armature core (not shown). One ends of three windings of the coil 11u are connected in common to the neutral point 11n, while the other ends thereof are connected in common to a terminal 11u2. The coil 12u is constituted of three windings arranged at 120-degree intervals with respect to the armature core (not shown) and is shifted by 60 degree from the coil 11u. One ends of three windings of the coil 12u are connected in common to the neutral point 12n, while the other ends thereof are connected in common to a terminal 12u2.

In FIG. 1, the engine 2 is, for example, a power generator mounted on a small two-wheeled vehicle. The crankshaft 3 is a component of the engine 2, which is a shaft for converting reciprocating motion of a piston (not shown) provided in the engine 2 into rotational motion. The rotation angle sensor 4 is a sensor for detecting a rotation angle (crank angle) of the crankshaft 3. The engine water temperature gauge 5 is a sensor for detecting a temperature of cooling water of the engine 2.

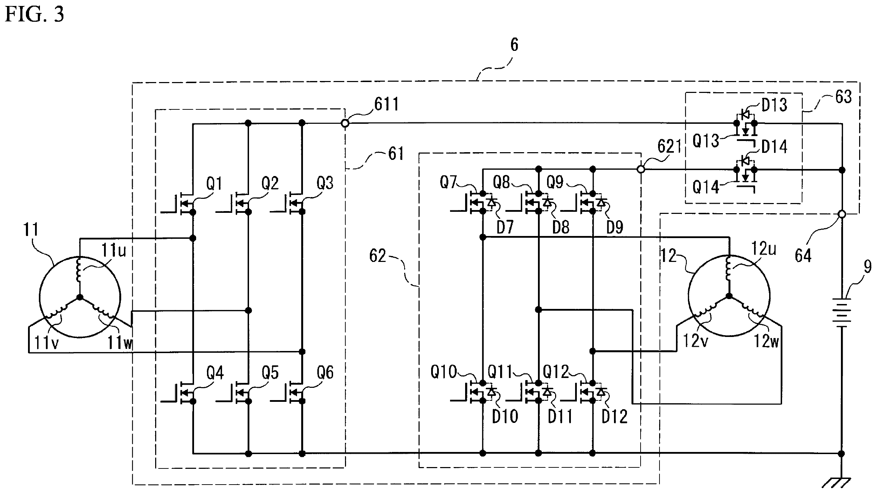

As shown in FIG. 3, the power conversion unit 6 includes an orthogonal transformation unit 61 (first orthogonal transformation unit), an orthogonal transformation unit 62 (second orthogonal transformation unit), a switch unit 63, and an input/output terminal 64. The orthogonal transformation unit 61 includes six n-channel MOSFETs (hereinafter referred to as MOSFETs) (Q1) to (Q6), which constitutes a three-phase bridge orthogonal transformation circuit. The orthogonal transformation unit 61 includes a DC terminal 611 on a positive side (high side) of a DC input/output line, while a negative side (low side) thereof is connected to a negative electrode of the battery 9. The orthogonal transformation unit 61 is connected individually to the respective coils 11u, 11w, and 11v of the winding portion 11, so that the orthogonal transformation unit 61 performs bidirectional AC-DC power conversion. The orthogonal transformation unit 62 includes six MOSFETs (Q7) to (Q12), which constitute a three-phase bridge orthogonal transformation circuit. The orthogonal transformation unit 62 includes a DC terminal 621 on the positive side (high side) of the DC input/output line, while the negative side (low side) thereof is connected to the negative electrode of the battery 9. The orthogonal transformation unit 62 is connected individually to the respective coils 12u, 12w, and 12v of the winding portion 12, so that the orthogonal transformation unit 62 performs bidirectional AC-DC power conversion.

The switch unit 63 includes two MOSFETs (Q13) and (Q14). MOSFET (Q13) is interposed between the DC terminal 611 of the orthogonal transformation unit 61 and the input/output terminal 64 connected to the battery 9, and performs connection and disconnection between the DC terminal 611 and the input/output terminal 64. The MOSFET (Q14) is interposed between the DC terminal 621 of the orthogonal transformation unit 62 and the input/output terminal 64, and performs connection and disconnection between the DC terminal 621 and the input/output terminal 64. In this case, a cathode of a parasitic diode D13 of MOSFET (Q13) is connected to the DC terminal 611, while an anode of the parasitic diode D13 is connected to the input/output terminal 64. A cathode of a parasitic diode D14 of MOSFET (Q14) is connected to the DC terminal 621, while an anode of the parasitic diode D14 is connected to the input/output terminal 64. For example, the parasitic diode D14 of MOSFET (Q14) is connected in the direction shown in FIG. 3, thereby making it possible to, when MOSFET (Q14) is turned off, prevent the power generated in the wiring potion 12 from being output from the DC terminal 621 through the parasitic diodes D7 to D12 of MOSFETs (Q17) to (Q12). Additionally, the input/output terminal 64 can be connected to the battery 9 via a predetermined cable or via a cable and a fuse, a switch, or the like. Further, an electric load such as an electric component (not shown) is connected to the battery 9.

Here, the power conversion unit 6 includes a driver circuit (not shown) for performing on-off control on MOSFETs (Q1) to (Q14). The driver circuit performs on-off control on MOSFETs (Q1) to (Q14) in accordance with a predetermined energization mode notified from the control unit 7.

The control unit 7 is a device for performing ignition control and the like of the engine 2. In this case, the control unit 7 receives a signal output from the rotational angle sensor 4, a signal output from the engine water temperature gauge 5, and a signal output from the starter switch 8. Additionally, the control unit 7 notifies the driver circuit (not shown) included in the power conversion unit 6 of an energization mode of MOSFETs (Q1) to (Q14). The control unit 7 selects whether to use either one or both of the winding portion 11 and the winding portion 12, in accordance with a state of the load in respective cases where the starter generator 1 is used as a power generator and where the starter generator 1 is used as a starter motor for starting the engine. In the case where the starter generator 1 is used as the starter motor, the control unit 7 selects whether to use either one or both of the winding portion 11 and the winding portion 12, in response to an output of the engine water temperature gauge 5, an output of the rotation angle sensor 4, and the like, based on the temperature of the coolant water of the engine 2 or the position of the piston. For example, if the coolant temperature is equal to or below a predetermined reference value, the engine 2 has been cooled, and the viscosity of the engine oil is relatively large, so that the torque to drive the crankshaft 3 becomes relatively large at the start of the engine 2. Therefore, in such a case, the control unit 7 uses the winding unit 11 and the winding portion 12 to drive the starter generator 1 as the motor. Additionally, for example, in a single-cylinder engine, the torque to drive the crankshaft 3 changes at the start of the engine 2 depending on the position of the piston and the opening and closing state of the valve of the engine 2. Additionally, this change varies depending on the number of engine strokes and the number of cylinders. The control unit 7 detects the position of the piston and the opening and closing condition of the valve in accordance with, for example, a signal output from a sensor (not shown) and the processing contents of engine control. In a case where the torque to drive the crankshaft 3 is predicted to become relatively large at the start of the engine 2, the control unit 7 uses the winding unit 11 and the winding portion 12 to drive the starter generator 1 as the motor.

On the other hand, the starter switch 8 is a switch which a user operates at the start of the engine 2. Additionally, the battery 9 is a secondary battery.

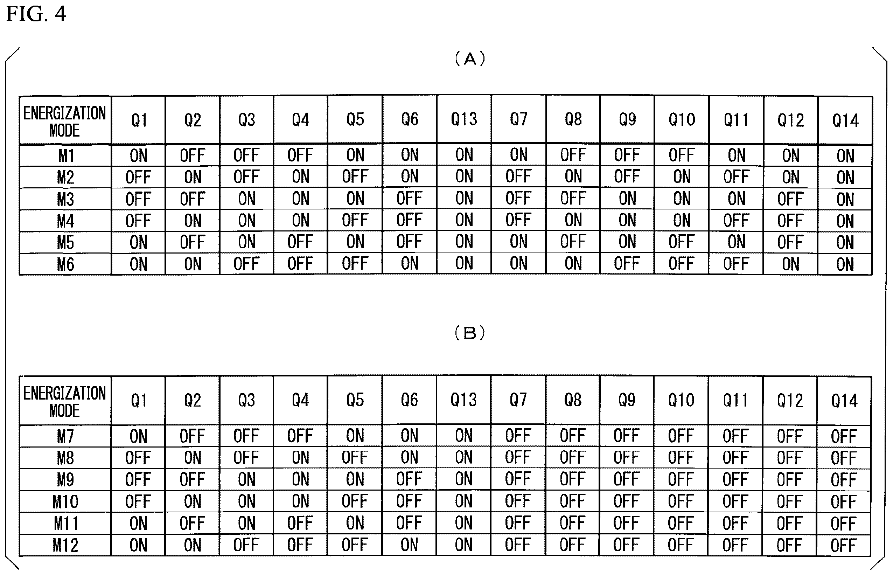

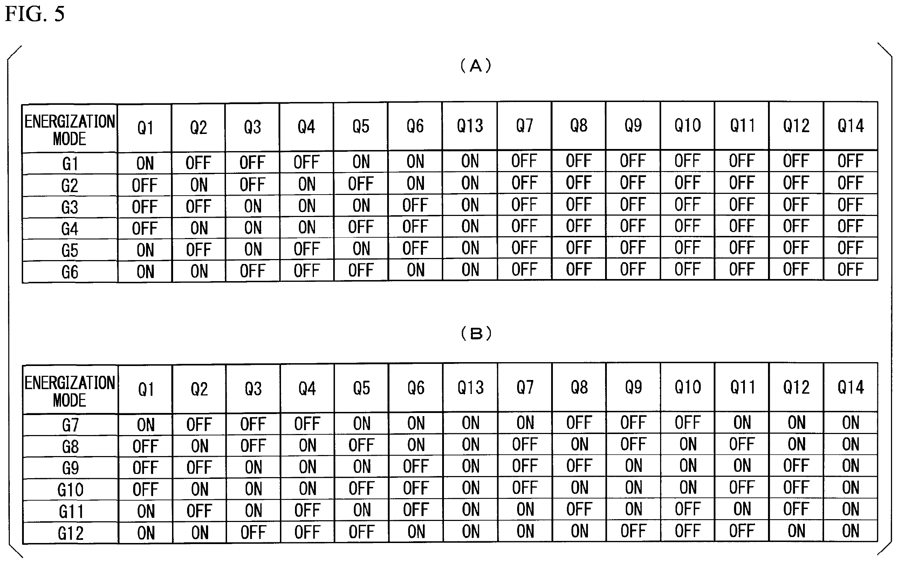

Next, an operation example of the power conversion unit 6 shown in FIG. 3 is described with reference to FIGS. 4 and 5. FIG. 4 is a diagram showing an example of the energization modes of the power conversion unit 6 shown in FIG. 3 in a case where the starter generator 1 is used as the starter motor. Hereinafter, control to be performed in the case where the starter generator 1 is used as the starter motor is referred to as motor control. Here, each energization mode shown in FIG. 4(A) and FIG. 4(B) is one in a case of 180-degree energization control. FIG. 4(A) and FIG. 4(B) show a combination of ON (on) or OFF (OFF) operation of respective MOSFETs (Q1) to (Q14) of the power conversion unit 6. FIG. 4(A) is a case where both the winding portion 11 and the winding portion 12 are used. FIG. 4(B) is a case where only the winding portion 11 is used. FIG. 5 is a diagram showing paths of current in the circuit diagram shown in FIG. 3 in the energization mode M1 shown in FIG. 4(A) and the energization mode M7 shown in FIG. 4(B).

When both the winding portion 11 and the winding portion 12 are used in the case of the motor control, the control unit 7 selects one of the energization modes M1 to M6 shown in FIG. 4(A) and notifies the power conversion unit 6 of the selected mode. In other words, based on an output of the rotation angle sensor 4, the control unit 7 repeatedly selects any one of the energization modes M1 to M6 shown in FIG. 4(A) in accordance with the angle of the field portion 15, and notifies the power conversion unit 6 of the selected energization mode in each case. In this case, MOSFETs (Q1) to (Q6) and MOSFETs (Q7) to (Q12) are controlled to turn ON or OFF in accordance with a combination of ON and OFF according to the energization mode. Additionally, MOSFETs (Q13) and (Q14) are all controlled to turn ON.

On the other hand, when only the winding part 11 is used in the case of the motor control, the control unit 7 selects one of the energization modes M7 to M12 shown in FIG. 4(B), and notifies the power conversion unit 6 of the selected energization mode. In other words, based on an output of the rotation angle sensor 4, the control unit 7 repeatedly selects one of the energization modes M7 to M12 shown in FIG. 4(B) in accordance with the angle of the field portion 15, and notifies the power conversion unit 6 of the selected energization mode in each case. In this case, MOSFETs (Q1) to (Q6) are controlled to turn ON or OFF. Additionally, MOSFETs (Q7) to (Q12) and MOSFET (Q14) are all controlled to turn OFF. Further, MOSFET (Q13) is controlled to turn ON.

Next, energization modes of the power conversion unit 6 shown in FIG. 3 in the case where the starter generator 1 is used as the power generator will be described with reference to FIG. 5. Hereinafter, control to be performed in the case where the starter generator 1 is used as the power generator is referred to as power generation control. FIG. 5 is a diagram showing an example of the energization modes of the power conversion unit 6 shown in FIG. 3 in the case of the power generation control. Here, FIG. 5(A) and FIG. 5(B) show a combination of ON (on) or OFF (off) operation of MOSFETs (Q1) to (Q14) of the power conversion unit 6. FIG. 5(A) is the case where only the winding portion 11 is used. FIG. 5(B) is the case where both the winding portion 11 and the winding portion 12 are used.

When only the winding portion 11 is used in the case of power generation control, the control unit 7 selects one of the energization modes G1 to G6 shown in FIG. 5(A), and notifies the power conversion unit 6 of the selected energization mode. In other words, based on an output of the rotation angle sensor 4, the control unit 7 repeatedly selects any one of the energization modes G1 to G6 shown in FIG. 5(A) in accordance with the angle of the field portion 15, and notifies the power conversion unit 6 of the selected energization mode in each case. In this case, MOSFETs (Q1) to (Q6) are controlled to turn ON or OFF. Additionally, MOSFETs (Q7) to (Q12) and MOSFET (Q14) are all controlled to turn OFF. Further, MOSFET (Q13) is controlled to turn ON. However, in the case of the power generation control, if the voltage of the battery 9 exceeds a predetermined regulation voltage, the power conversion unit 6 performs, according to the voltage of the battery 9, short control or the like appropriately using MOSFETs (Q1) to (Q6), thus controlling the generated voltage.

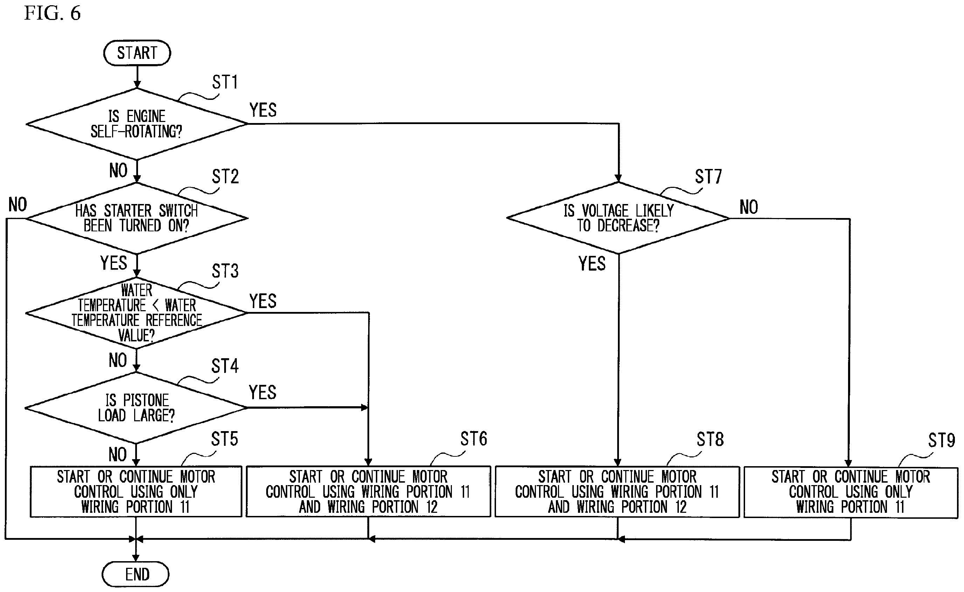

On the other hand, when both the winding portion 11 and the winding portion 12 are used in the case of the power generation control, the control unit 7 selects one of the energization modes G7 to G12 shown in FIG. 6(B), and notifies the power conversion unit 6 of the selected energization mode. In other words, based on an output of the rotation angle sensor 4, the control unit 7 repeatedly selects any one of the energization modes G7 to G12 shown in FIG. 6(B) in accordance with the angle of the field portion 15, and notifies the power conversion unit 6 of the selected energization mode in each case. In this case, MOSFETs (Q1) to (Q6) and MOSFETs (Q7) to (Q12) are controlled to turn ON or OFF. Additionally, MOSFETs (Q13) and (Q14) are all controlled to turn ON. However, in the case of the power generation control, if the voltage of the battery 9 exceeds the predetermined regulation voltage, the power conversion unit 6 performs, according to the voltage of the battery 9, short control or the like appropriately using MOSFETs (Q1) to (Q6) and MOSFETs (Q7) to (Q12), thus controlling the generated voltage.

Next, an operation example of the control unit 7 is described with reference to FIG. 6. For example, when an ignition switch (not shown) is turned on, the control unit 7 repeatedly performs the processing shown in FIG. 6 at predetermined intervals. First, the control unit 7 determines based on a result of the detection by the rotation angle sensor 4 or the like whether or not the engine 2 is self-rotating (step ST1). If the engine 2 is not self-rotating (step ST1: "NO"), the control unit 7 determines whether or not the starter switch 8 has been turned on (step ST2). If the starter switch 8 has not been turned on (step ST2: "NO"), the control unit 7 ends the processing shown in FIG. 6. On the other hand, if the starter switch 8 has been turned on (step ST2: "YES"), the control unit 7 determines based on a result of the detection by the engine water temperature gauge 5 whether or not the water temperature is less than a predetermined water temperature reference value (step ST3).

If the water temperature is not less than the predetermined water temperature reference value (step ST3: "NO"), the control unit 7 determines whether or not a piston load of the engine 2 is large (step ST4). The piston load of the engine 2 means the drive resistance of the piston which changes depending on the position of the piston or the state of the valve. Additionally, that the piston load is large means that the drive resistance of the piston is within a predetermined range. The control unit 7 confirms the position of the piston and the state of the valve based on, for example, values of various sensors used for the engine control, and obtains based on the result of the confirmation, the drive resistance of the piston which increases in a compression step or the like. Then, the control unit 7 determines whether or not the obtained drive resistance of the piston is within a predetermined range. If the piston load is not large (step ST4: "NO"), the control unit 7 starts the motor control using only the winding portion 11 (step ST5). In other words, if the water temperature is equal to or greater than the water temperature reference value (step ST3: "NO"), and the piston load is not large (step ST4: "NO"), the control unit 7 starts, or continues if already started, the motor control using only the winding unit 11 (step ST5).

On the other hand, if the water temperature is less than the water temperature reference value (step ST3: "YES"), or if the piston load is large (step ST4: "YES"), the control unit 7 starts, or continues if already started, the motor control using the winding portion 11 and the winding portion 12 (step ST6).

Further, at step ST1, if the engine 2 is determined to be self-rotating (step ST1: "YES"), the control unit 7 determines whether or not the voltage of the battery 9 is likely to decrease (step ST7). The voltage of the battery 9 is likely to decrease in cases where the voltage of the battery 9 is below the predetermined regulation voltage, or where a ratio of time for which a control to suppress the generated power by short control or the like is being performed is almost zero (i.e., below a predetermined reference value). If the voltage of the battery 9 is likely to decrease (step ST7: "YES"), the control unit 7 starts, or continues if already started, the power generation control using the winding portion 11 and the winding portion 12 (step ST8). On the other hand, if the voltage of the battery 9 is not likely to decrease (step ST7: "NO"), the control unit 7 starts, or continues if already started, the power generation control using only the winding unit 11 (step ST9).

As described above, the starter generator apparatus 100 of the present embodiment includes: the starter generator 1 (ACG starter motor) including the armature unit including the winding portion 11 and the winding portion 12 which are arranged in parallel, each of the winding portion and the winding including a three-phase coil (polyphase coil), and the field unit including the permanent magnet; the orthogonal transformation unit 61 connected to the winding portion 11 and configured to bidirectionally convert an electric power between a direct current and an alternate current; the orthogonal transformation unit 62 connected to the winding portion 12 and configured to bidirectionally convert an electric power between a direct current and an alternate current; and the one or plural MOSFETs (switching elements) (Q13) and/or (Q14) interposed between the input/output terminal 64 connected to the battery 9 and at least one of the DC terminal 611 of the orthogonal transformation unit 61 and the DC terminal 621 of the orthogonal transformation unit 62, and configured to perform connection and disconnection between the input/output terminal 64 and the at least one of the DC terminals 611 and 621. According to this configuration, it is possible to easily improve the control characteristics of the starter generator 1 (ACG starter motor), such as a reduction in power loss.

Additionally, as described above, according to the present embodiment, the wiring portion is divided into two so that either one or both are selectively used, thereby optimizing the balance between the power generation and the electric load. According to this configuration, when the motor with the winding specifications designed to meet the torque characteristic of the starter motor is used as a power generator, it is possible to reduce the surplus power generated by the unbalance between the electric loads. In other words, it is possible to reduce the reflux current of the winding portion and heat generation (power loss) of the windings and the power device elements. Therefore, it is possible to easily reduce the excess power at the time of the power generation without impairing the motor torque. This makes it possible to reduce the fuel efficiency and the friction of the engine 2.

Further, in a case where the engine 2 is easily warmed and rotated, the number of windings in use at the time of the motor control is reduced, thereby making it possible to reduce the power consumption of the battery 9.

Moreover, it is possible to relatively reduce the accuracy of the required conduction angle (output direction) at the time of the power generation control.

Additionally, it is possible to reduce the heat generation of the armature winding and the power device by reducing the reflux current.

Further, by varying the specifications of the winding portion 11 and the winding portion 12 (the number of turns, wire diameter, etc.), it is possible to select the generated torque in the motor control and the power output in the power generation control, from three levels which correspond to: a case where only the winding portion 11 is used; a case where the winding portion 12 is used; and a case where the winding portion 11 and the winding portion 12 are used.

### DESCRIPTION OF REFERENCE NUMERALS

100 starting power generation control system
1 starter generator
6 power conversion unit
7 control unit
D7 to D14 parasitic diode
Q1 to Q14 MOSFET
11, 12 winding portion
11u, 11v, 11w, 12u, 12v, 12w coil (winding)
15 field magnet portion
61, 62 orthogonal transformation unit
611, 621 AC terminals (first AC terminal)
64 input/output terminal

## Claims

1. A starter generator apparatus (100) comprising:
a starter generator (1) including
an armature unit including a first winding portion (11) and a second winding portion (12) which are arranged in parallel, each of the first winding portion (11) and the second winding portion (12) including a polyphase coil, and
a field unit (15) including a permanent magnet;
a first orthogonal transformation unit (61) connected to the first winding portion (11) and configured to bidirectionally convert an electric power between a direct current and an alternate current;
a second orthogonal transformation unit (62) connected to the second winding portion (12) and configured to bidirectionally convert an electric power between a direct current and an alternate current;
a battery (9) connected in parallel with the first and second orthogonal transformation units (61, 62);
a first switching element (Q13) interposed between a positive terminal of the battery (9) and an input terminal of the first orthogonal transformation unit (61), and configured to perform connection and disconnection between the positive terminal of the battery (9) and the input terminal of the first orthogonal transformation unit (61); and
a second switching element (Q14) interposed between the positive terminal of the battery (9) and an input terminal of the second orthogonal transformation unit (62), and configured to perform connection and disconnection between the positive terminal of the battery (9) and the input terminal of the second orthogonal transformation unit (62)
a control unit (7) configured to control the first and second orthogonal transformation units (61, 62) and the first and second switching elements (Q13, Q14), wherein
the control unit (7) is configured to,
when the starter generator (1) is used as a starter motor for starting an engine, select, by the switching elements (Q13, Q14), either one or both of the first wiring portion (11) and the second wiring portion (12), based on a magnitude of a load of a piston of the engine and a coolant temperature of the engine, and
when the starter generator (1) is used as a power generator, select, by the switching elements (Q13, Q14), either one or both of the first wiring portion (11) and the second wiring portion (12), based on a voltage of the battery (9).

2. The starter generator apparatus (100) according to claim 1, wherein
the first switching element (Q13) includes a first MOSFET having a first parasitic diode (D13),
the second switching element (Q14) includes a second MOSFET having a second parasitic diode (D14),
a cathode of the first parasitic diode (D13) is connected to the input terminal of the first orthogonal transformation unit (61), while an anode of the first parasitic diode (D13) is connected to the positive terminal of the battery (9), and
a cathode of the second parasitic diode (D14) is connected to the input terminal of the second orthogonal transformation unit (62), while an anode of the second parasitic diode (D14) is connected to the positive terminal of the battery (9).

3. A starting power generating method for the starter generator apparatus (100) according to claim 1 or 2, the starting power generating method comprising steps of:
when the starter generator (1) is used as a starter motor for starting an engine, selecting, by the switching elements, either one or both of the first winding portion (11) and the second winding portion (12) , based on a magnitude of a load of a piston of the engine and a coolant temperature of the engine; and
when the starter generator (1) is used as a power generator, selecting, by the switching elements (Q13, Q14), either one or both of the first winding portion (11) and the second winding portion (12), based on a voltage of the battery (9).

## Patentansprüche

1. Startergeneratoreinrichtung (100), umfassend:
einen Startergenerator (1), beinhaltend:
eine Ankereinheit, die einen ersten Wicklungsabschnitt (11) und einen zweiten Wicklungsabschnitt (12) beinhaltet, die parallel angeordnet sind, wobei jeder von dem ersten Wicklungsabschnitt (11) und des zweiten Wicklungsabschnitts (12) eine mehrphasige Spule beinhaltet, und
eine Feldeinheit (15), die einen Dauermagneten beinhaltet;
eine erste orthogonale Transformationseinheit (61), die mit dem ersten Wicklungsabschnitt (11) verbunden und dazu konfiguriert ist, eine elektrische Leistung zwischen einem Gleichstrom und einem Wechselstrom bidirektional umzuwandeln;
eine zweite orthogonale Transformationseinheit (62), die mit dem zweiten Wicklungsabschnitt (12) verbunden und dazu konfiguriert ist, eine elektrische Leistung zwischen einem Gleichstrom und einem Wechselstrom bidirektional umzuwandeln;
eine Batterie (9), die parallel mit der ersten und der zweiten Transformationseinheit (61, 62) verbunden ist [Fig. 3];
ein erstes Schaltelement (Q13), das zwischen einem positiven Anschluss der Batterie (9) und einem Eingangsanschluss der ersten orthogonalen Transformationseinheit (61) eingefügt und dazu konfiguriert ist, eine Verbindung und Trennung zwischen dem positiven Anschluss der Batterie (9) und dem Eingangsanschluss der ersten orthogonalen Transformationseinheit (61) durchzuführen [Fig. 3]; und
ein zweites Schaltelement (Q14), das zwischen dem positiven Anschluss der Batterie (9) und einem Eingangsanschluss der zweiten orthogonalen Transformationseinheit (62) eingefügt und dazu konfiguriert ist, eine Verbindung und Trennung zwischen dem positiven Anschluss der Batterie (9) und dem Eingangsanschluss der zweiten orthogonalen Transformationseinheit (62) durchzuführen [Fig. 3];
eine Steuereinheit (7), die dazu konfiguriert ist, die erste und die zweite orthogonale Transformationseinheit (61, 62) und das erste und das zweite Schaltelement (Q13, Q14) zu steuern, wobei
die Steuereinheit (7) dazu konfiguriert ist,
wenn der Startergenerator (1) als Anlasser zum Starten eines Motors verwendet wird, entweder einen oder beide von dem ersten Wicklungsabschnitt (11) und
dem zweiten Wicklungsabschnitt (12) auf Grundlage einer Größe einer Last eines Kolbens des Motors und einer Kühlmitteltemperatur des Motors durch die Schaltelemente (Q13, Q14) auszuwählen [28-30; Fig. 6], und
wenn der Startergenerator (1) als Stromgenerator verwendet wird, entweder einen oder beide von dem ersten Wicklungsabschnitt (11) und dem zweiten Wicklungsabschnitt (12) auf Grundlage einer Spannung der Batterie (9) durch die Schaltelemente (Q13, Q14) auszuwählen [31; Fig. 6].

2. Startergeneratoreinrichtung (100) nach Anspruch 1, wobei das erste Schaltelement (Q13) einen ersten MOSFET mit einer ersten parasitären Diode (D13) beinhaltet,
das zweite Schaltelement (Q14) einen zweiten MOSFET mit einer zweiten parasitären Diode (D14) beinhaltet,
eine Kathode der ersten parasitären Diode (D13) mit dem Eingangsanschluss der ersten orthogonalen Transformationseinheit (61) verbunden ist, während eine Anode der ersten parasitären Diode (D13) mit dem positiven Anschluss der Batterie (9) verbunden ist, und
eine Kathode der zweiten parasitären Diode (D14) mit dem Eingangsanschluss der zweiten orthogonalen Transformationseinheit (62) verbunden ist, während eine Anode der zweiten parasitären Diode (D14) mit dem positiven Anschluss der Batterie (9) verbunden ist.

3. Startleistungsgenerierungsverfahren für die Startergeneratoreinrichtung (100) nach Anspruch 1 oder 2, wobei das Startleistungsgenerierungsverfahren die folgenden Schritte umfasst:
wenn der Startergenerator (1) als Anlasser zum Starten eines Motors verwendet wird, Auswählen von entweder einem oder beiden von dem ersten Wicklungsabschnitt (11) und dem zweiten Wicklungsabschnitt (12) auf Grundlage einer Größe einer Last eines Kolbens des Motors und einer Kühlmitteltemperatur des Motors durch die Schaltelemente [28-30; Fig. 6]; und
wenn der Startergenerator (1) als Stromgenerator verwendet wird, Auswählen von entweder einem oder beiden von dem ersten Wicklungsabschnitt (11) und dem zweiten Wicklungsabschnitt (12) auf Grundlage einer Spannung der Batterie (9) durch die Schaltelemente (Q13, Q14) [31; Fig. 6].

## Revendications

1. Appareil générateur-démarreur (100) comprenant :
un générateur-démarreur (1) incluant
une unité d'induit incluant une première portion d'enroulement (11) et une seconde portion d'enroulement (12) qui sont agencées en parallèle, chacune de la première portion d'enroulement (11) et de la seconde portion enroulement (12) incluant une bobine polyphasée, et
une unité de champ (15) incluant un aimant permanent ;
une première unité de transformation orthogonale (61) connectée à la première portion d'enroulement (11) et configurée pour convertir bidirectionnellement une alimentation électrique entre un courant continu et un courant alternatif ;
une seconde unité de transformation orthogonale (62) connectée à la seconde portion d'enroulement (12) et configurée pour convertir bidirectionnellement une alimentation électrique entre un courant continu et un courant alternatif ;
une batterie (9) connectée en parallèle avec les première et seconde unités de transformation orthogonale (61, 62) [Figure 3] ;
un premier élément de commutation (Q13) interposé entre une borne positive de la batterie (9) et une borne d'entrée de la première unité de transformation orthogonale (61), et configuré pour réaliser une connexion et une déconnexion entre la borne positive de la batterie (9) et la borne d'entrée de la première unité de transformation orthogonale (61) [Figure 3] ; et
un second élément de commutation (Q14) interposé entre la borne positive de la batterie (9) et une borne d'entrée de la seconde unité de transformation orthogonale (62), et configuré pour réaliser une connexion et une déconnexion entre la borne positive de la batterie (9) et la borne d'entrée de la seconde unité de transformation orthogonale (62) [Figure 3] ;
une unité de commande (7) configurée pour commander les première et seconde unités de transformation orthogonale (61, 62) et les premier et second éléments de commutation (Q13, Q14), dans lequel
l'unité de commande (7) est configurée pour,
lorsque le générateur-démarreur (1) est utilisé comme démarreur destiné à démarrer un moteur thermique, sélectionner, par les éléments de commutation (Q13, Q14), l'une et/ou l'autre de la première portion de câblage (11) et de la seconde portion de câblage (12), d'après une grandeur d'un effort d'un piston du moteur thermique et une température de liquide de refroidissement du moteur thermique [28-30 ; Figure 6], et
lorsque le générateur-démarreur (1) est utilisé comme générateur d'alimentation, sélectionner, par les éléments de commutation (Q13, Q14), l'une et/ou l'autre de la première portion de câblage (11) et de la seconde portion de câblage (12), d'après une tension de la batterie (9) [31 ; Figure 6].

2. Appareil générateur-démarreur (100) selon la revendication 1, dans lequel le premier élément de commutation (Q13) inclut un premier MOSFET ayant une première diode parasite (D13),
le second élément de commutation (Q14) inclut un second MOSFET ayant une seconde diode parasite (D14),
une cathode de la première diode parasite (D13) est connectée à la borne d'entrée de la première unité de transformation orthogonale (61), alors qu'une anode de la première diode parasite (D13) est connectée à la borne positive de la batterie (9), et
une cathode de la seconde diode parasite (D14) est connectée à la borne d'entrée de la seconde unité de transformation orthogonale (62), alors qu'une anode de la seconde diode parasite (D14) est connectée à la borne positive de la batterie (9).

3. Procédé de génération d'alimentation de démarrage pour l'appareil générateur-démarreur (100) selon la revendication 1 ou 2, le procédé de génération d'alimentation de démarrage comprenant des étapes de :
lorsque le générateur-démarreur (1) est utilisé comme démarreur destiné à démarrer un moteur thermique, sélection, par les éléments de commutation, de l'une et/ou l'autre de la première portion d'enroulement (11) et de la seconde portion d'enroulement (12), d'après une grandeur d'un effort d'un piston du moteur thermique et une température de liquide de refroidissement du moteur thermique [28 à 30 ; Figure 6] ; et
lorsque le générateur-démarreur (1) est utilisé comme générateur d'alimentation, sélection, par les éléments de commutation (Q13, Q14), de l'une et/ou l'autre de la première portion d'enroulement (11) et de la seconde portion d'enroulement (12), d'après une tension de la batterie (9) [31 ; Figure 6].
